(19) Europäisches Patentamt
European Patent Office
Office européen des brevets

(11) **EP 4 159 687 A1**

(12) **EUROPEAN PATENT APPLICATION**

(43) Date of publication:
**05.04.2023 Bulletin 2023/14**

(21) Application number: **22198548.4**

(22) Date of filing: **28.09.2022**

(51) International Patent Classification (IPC):
**C01G 53/00** $^{(2006.01)}$

(52) Cooperative Patent Classification (CPC):
**C01G 53/42;** C01P 2004/03; C01P 2004/50;
C01P 2006/40

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 KR 20210130196**

(71) Applicant: **SK On Co., Ltd.**
**Seoul 03161 (KR)**

(72) Inventors:
• **CHOI, Jae Ho**
**34124 Daejeon (KR)**

• **KIM, Jik Soo**
**34124 Daejeon (KR)**
• **NOH, Mi Jung**
**34124 Daejeon (KR)**
• **KIL, Hyo Shik**
**34124 Daejeon (KR)**
• **LEE, Ji Sun**
**34124 Daejeon (KR)**

(74) Representative: **Stolmár & Partner**
**Patentanwälte PartG mbB**
**Blumenstraße 17**
**80331 München (DE)**

(54) **CATHODE ACTIVE MATERIAL FOR LITHIUM SECONDARY BATTERY, METHOD OF PREPARING THE SAME AND LITHIUM SECONDARY BATTERY INCLUDING THE SAME**

(57) A cathode active material for a lithium secondary battery comprises lithium-nickel composite metal oxide particles, each of which has a secondary particle structure in which primary particles are aggregated. The lithium-nickel composite metal oxide particles include a first element including at least one element selected from the group consisting of B, Al, Si, Ti, V, Mn, Fe, Co, Cu, Zn, Zr, Mo and W, and a second element having an ionic radius of 80 pm or more. The second element is different from nickel and the first element. The second element is present on an outer surface of the secondary particle, at grain boundaries between the primary particles and at an inside of the primary particles.

EP 4 159 687 A1

**Description**

TECHNICAL FIELD

The present invention relates to a cathode active material for a lithium secondary battery, a method of preparing the same and a lithium secondary battery including the same. More particularly, the present invention relates to a cathode active material containing lithium and nickel, a method of preparing the same and a lithium secondary battery including the same.

BACKGROUND

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as an electric vehicle.

For example, the secondary battery includes, e.g., a lithium secondary battery, a nickel-cadmium battery, a nickel-hydrogen battery, etc. The lithium secondary battery is being actively developed and applied due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape.

As an application range of the lithium secondary battery has been extended to large devices such as electric vehicles, a high-nickel (High-Ni)-based lithium oxide having an increased nickel content as a cathode active material is being developed to obtain high capacity of the lithium secondary battery.

However, the high nickel-based lithium oxide may deteriorate life-span and operational stability of the lithium secondary battery due to a side reaction with an electrolyte or a cation disorder caused when nickel ions exist at lithium ion sites.

SUMMARY

According to an aspect of the present invention, there is provided a cathode active material for a lithium secondary battery having improved operation stability and electrical property.

According to an aspect of the present invention, there is provided a method of preparing a cathode active material for a lithium secondary battery having improved operation stability and electrical property.

According to an aspect of the present invention, there is provided a lithium secondary battery having improved operation stability and electrical property.

A cathode active material for a lithium secondary battery according to embodiments of the present invention includes lithium-nickel composite metal oxide particles, each of which has a secondary particle structure in which primary particles are aggregated. The lithium-nickel composite metal oxide particles include a first element including at least one element selected from the group consisting of B, Al, Si, Ti, V, Mn, Fe, Co, Cu, Zn, Zr, Mo and W, and a second element having an ionic radius of 80 pm or more. The second element is different from nickel and the first element. The second element is present on an outer surface of the secondary particle, at grain boundaries between the primary particles and at an inside of the primary particles.

In some embodiments, the second element may include at least one selected from the group consisting of Na, K, Ca, Cr, Mn, Rb, Sr, Y, Pd, Ag, Cd, In, Sn, Cs, Ba, Pt, Au and Ce.

In some embodiments, the lithium-nickel composite metal oxide particles may have a chemical structure represented by Chemical Formula 1.

[Chemical Formula 1]     $Li_xNi_yM1_{1-y}M2_zO_w$

In Chemical Formula 1, M1 represents the first element, M2 represents the second element, $0<x\leq1.1$, $0.8\leq y\leq0.98$, $0.001\leq z\leq0.02$, and $1.8\leq w\leq2.02$.

In some embodiments, in Chemical Formula 1, $0.85\leq y\leq0.95$.

In some embodiments, in Chemical Formula 1, $0.001\leq z\leq0.01$.

In some embodiments, a sum of an amount present on the outer surface and an amount at the grain boundaries between the primary particles may be greater than an amount present at the inside of the primary particles based on a total amount of the second element.

In some embodiments, an amount present at the grain boundaries between the primary particles may be greater than an amount present at the inside of the primary particles based on the total amount of the second element.

In some embodiments, a ratio of the second element present at the inside of the primary particles based on a total weight of the second element may be from 5 wt% to 20 wt%.

In some embodiments, a ratio of the second element present at the inside of the primary particles based on a total weight of the second element may be from 7 wt% to 20 wt%.

In some embodiments, the cathode active material may include at least one selected from the group consisting of a sulfide, a sulfate, a fluoroxide, a hydrate, a hydroxide, a carbonate and an oxide containing the second element.

In some embodiments, the sulfide, the sulfate, the fluoroxide, the hydrate, the hydroxide, the carbonate or the oxide containing the second element may be present at the grain boundaries between the primary particles.

A lithium secondary battery according to embodiments of the present invention includes a cathode including a cathode active material layer including the cathode active material for a lithium secondary battery of the above-described embodiments, and an anode facing the cathode.

In a method of preparing a cathode active material for a lithium secondary battery, an active material precursor containing nickel is prepared. The active material precursor, a source of a heterogeneous element source with an ion radius of 80 pm or more and a lithium compound are reacted to form a preliminary cathode active material. The preliminary cathode active material is heat-treated in an oxygen atmosphere of 50 vol% or more.

In some embodiments, the heat-treating may be performed in an oxygen atmosphere of 70 vol% to 90 vol%.

In some embodiments, a temperature of the heat treatment may be from 600 °C to 850 °C.

In some embodiments, the heterogeneous element may include at least one selected from the group consisting of Na, K, Ca, Cr, Mn, Rb, Sr, Y, Pd, Ag, Cd, In, Sn, Cs, Ba, Pt, Au and Ce.

In some embodiments, the preliminary cathode active material may have a secondary particle structure in which primary particles are aggregated. The heat-treating may include partially doping the heterogeneous element into the primary particles.

A cathode active material for a lithium secondary battery according to embodiments of the present invention may have a high-nickel composition and may include a heterogeneous element having an ionic radius equal to or greater than a predetermined size.

In an aspect of the present invention, a cathode active material for a lithium secondary battery prepared by a method the includes preparing an active material precursor containing nickel; reacting the active material precursor, a source of a heterogeneous element source with an ionic radius of 80 pm or more, and a lithium compound to form a preliminary cathode active material; and heat-treating the preliminary cathode active material in an oxygen atmosphere of 50 vol% or more is provided.

In an aspect of the present invention, a lithium secondary battery including the cathode active material prepared by the above-described method is provided.

The heterogeneous element may be present at, e.g., a grain boundary of primary particles and may act as a barrier to block a side reaction with nickel and an electrolyte. Additionally, the heterogeneous element may serve as a binder for the primary particles. Accordingly, chemical and structural stability of the cathode active material may be improved, thereby further improving life-span properties of a lithium secondary battery.

The heterogeneous element may also be distributed at an inside of the primary particle. The heterogeneous element may reduce a cation disorder that nickel ions exist at lithium-ion sites, thereby suppressing degradation of stability and performance due to a residual lithium. Accordingly, structural stability of the cathode active material may be improved, and initial capacity and battery efficiency of the lithium secondary battery may also be improved.

BRIEF DESCRIPTION OF THE DRAWINGS

FIGS. 1 and 2 are a schematic plan view and a schematic cross-sectional view, respectively, of a lithium secondary battery in accordance with exemplary embodiments.

FIG. 3 is a scanning electron microscope (SEM) image of cathode active material particles according to Example 1 when a total amount of a second element was measured.

FIG. 4 is an SEM image of cathode active material particles according to Example 1 in a state in which the second element was dissolved from a surface after a solvent immersion.

DETAILED DESCRIPTION OF THE EMBODIMENTS

Embodiments of the present invention provide a cathode active material including lithium-nickel composite metal oxide particles having a high-nickel composition and containing a heterogeneous element other than nickel, and a lithium secondary battery including the same.

Hereinafter, embodiments of the present invention will be described in detail with reference to the accompanying drawings. However, the embodiments are provided as exemplary examples, and the spirit of the present invention are not limited to those specific embodiments.

As used herein, the term "excess amount" refers to being included in the largest content or molar ratio among metals other than lithium. As used herein, the term "content" or "concentration" may refer to a molar ratio in lithium metal oxide.

In exemplary embodiments, a cathode active material for a lithium secondary battery (hereinafter, abbreviated as a cathode active material) contains lithium and nickel. In some embodiments, the cathode active material may further include a first element in addition to nickel. In exemplary embodiments, the cathode active material may further include a second element in addition to nickel and the first element.

In exemplary embodiments, the cathode active material may contain the largest amount of nickel among elements other than lithium. For example, a molar ratio of nickel among a total number of moles of nickel and the first element may be 0.8 or more. Preferably, the molar ratio of nickel may be in a range 0.8 to 0.98, more preferably from 0.85 to 0.98. In an embodiment, the molar ratio of nickel may be in a range from 0.88 to 0.95.

The first element includes at least one element selected from the group consisting of B, Al, Si, Ti, V, Mn, Fe, Co, Cu, Zn, Zr, Mo, and W.

In some embodiments, the first element may include Co and/or Mn. In an embodiment, the first element may further include Al.

For example, Ni may be provided as a metal associated with a capacity of a lithium secondary battery. Accordingly, as described above, the cathode active material or lithium-nickel composite metal oxide particles having a composition containing a high content of Ni may be used as the cathode active material, a cathode and a lithium secondary battery of a high capacity may be provided, and power of the battery may also be increased..

For example, Co may be used as the first element, so that conductivity of the lithium-nickel composite metal oxide particles may be improved to enhance power. Mn may be used as the first element, so that chemical and thermal stability of the lithium-nickel composite metal oxide particles may be improved.

The second element may be included as a heterogeneous element of the lithium-nickel composite metal oxide particles. In example embodiments, the second element may include an element having an ionic radius of 80 pm or more. For example, the second element may include at least one selected from the group consisting of Na, K, Ca, Cr, Mn, Rb, Sr, Y, Pd, Ag, Cd, In, Sn, Cs, Ba, Pt, Au and Ce.

According to the present invention, the cathode active material includes lithium nickel-composite metal oxide particles having a secondary particle structure in which primary particles are aggregated or assembled. The second element has an ionic radius of 80 pm or more which is greater than an ionic radius of a lithium ion (about 76 pm).

Theus, the second element may serve as a barrier to prevent lithium ions from being precipitated on an outer surface of the primary particles or the secondary particle, and an amount of the second element present between the primary particles may be relatively increased. Accordingly, impurities such as lithium hydroxide or lithium carbonate may be prevented from remaining on a particle surface.

Additionally, the second element is present between the primary particles in an inner region of the secondary particle or the lithium nickel-composite oxide particle to reduce a side reactions between nickel and an electrolyte that may occur on the particle surface or at a grain boundary.

Further, a component containing the second element may function as a binder or a coagulant between the primary particles. Accordingly, structural and chemical stability of the cathode active material of the lithium-nickel composite metal oxide particle may be further improved, and stable capacity properties of the lithium secondary battery may be effectively provided.

As described above, as the content of Ni increases, the capacity of the lithium secondary battery may be improved. However, the high content of Ni may be disadvantageous from aspects of life-span properties and mechanical/electrical stability. For example, as Ni content is increased (e.g., to the nickel molar ratio of 0.8 or more), defects such as ignition and short circuit may not be sufficiently suppressed when penetration by an external object occurs.

Further, the side reaction between nickel and the electrolyte at an interface or the grain boundary of the primary particles may occur, and the life-span properties may be deteriorated due to a gas generation during a high-temperature charging/discharging.

In exemplary embodiments, the second element may be distributed together in the lithium-nickel composite metal oxide particles, so that chemical and mechanical instability caused by Ni may be alleviated. For example, the second element may be distributed at the grain boundary or the surface of the primary particles to reduce or block the side reaction between nickel and the electrolyte.

Accordingly, capacity retention and life-span properties at high temperature may be explicitly improved, and explosion and ignition due to the gas generation may be prevented.

In exemplary embodiments, the cathode active material may include lithium-nickel composite metal oxide particles having a chemical or crystal structure represented by Chemical Formula 1 below.

[Chemical Formula 1]    $Li_xNi_yM1_{1-y}M2_zO_w$

In Chemical Formula 1, M1 represents the first element and may include at least one selected from the group consisting of B, Al, Si, Ti, V, Mn, Fe, Co, Cu, Zn, Zr, Mo and W. M2 represents the second element and may include at least one selected from the group consisting of Na, K, Ca, Cr, Mn, Rb, Sr, Y, Pd, Ag, Cd, In, Sn, Cs, Ba, Pt, Au and Ce.

In Chemical Formula 1, $0<x\leq1.1$, $0.8\leq y\leq0.98$, $0.001\leq z\leq0.02$, and $1.8\leq w\leq2.02$.

In an embodiment, y represents the molar ratio of Ni, and may be $0.8\leq y\leq0.98$, $0.85\leq y\leq0.95$, or $0.85\leq y\leq0.95$.

In a preferable embodiment, in Chemical Formula 1, $0.001\leq z\leq0.01$, preferably $0.003\leq z\leq0.01$.

As described above, the second element is distributed on the surfaces of the primary particles of the lithium-nickel composite oxide particles. The second element is distributed between the primary particles or at the grain boundary at the inner region of the lithium-nickel composite oxide particles. The second element may also be distributed on an outer surface of the secondary particle.

In some embodiments, the second element is also distributed at an inside of the primary particle of the lithium-nickel composite oxide particle. Accordingly, the second element may function as an element for suppressing a cation disorder.

As described above, as the content of Ni increases, a probability of the cation disorder that Ni ions are present at or transferred to the Li ion positions may be increased, and thus life-span and operational stability of the lithium secondary battery may be deteriorated.

In exemplary embodiments, a portion of the second elements may be diffused into the primary particle of the lithium-nickel composite oxide particle to be substituted for lithium sites. Accordingly, the transition or substitution of Ni to the lithium site may be suppressed, and the cationic disorder may be suppressed.

The content of the second element may be adjusted to suppress the electrolyte side reaction/cation disorder caused by Ni without degrading an implementation of high capacity from the high-Ni composition. In some embodiments, the content of the second element in the cathode active material may exceeds 0 weight percent (wt%) based on a weight of Ni, and may be adjusted to 2.5 wt% or less.

If the content of the second element exceeds 2.5 wt%, an amount corresponding to defects occurring due to the Ni-ion presence at the lithium-ion sites may be exceeded, and an initial resistance of the lithium secondary battery may be increased and a discharge capacity may be reduced.

In a preferable embodiment, the content of the second element may be in a range from 0.01 wt% to 1.4 wt%, preferably from 0.01 wt% to 1 wt%, more preferably from 0.1 wt% to 1 wt%, based on the weight of Ni.

In some embodiments, the content of the second element may be in a range from about 400 ppm to 5,000 ppm in the cathode active material. In a preferable embodiment, the content of the second element may be in a range from about 400 ppm to 3,000 ppm, or about 450 ppm to 2,000 ppm.

As described above, the second element may be distributed on the outer surface of the secondary particle and at the grain boundaries of the primary particles, and may also exist at the inside of the primary particles. In exemplary embodiments, an amount distributed on the outer surface of the secondary particles and the grain boundaries of the primary particles may be greater than an amount present at the inside of the primary particles among a total weight of the second element.

In some embodiments, the amount distributed at the grain boundaries of the primary particles may be greater than the amount present at the inside of the primary particles among the total weight of the second element.

In some embodiments, a ratio of the second element present at the inside of the primary particle based on the total weight of the second element may be in a range from 5 wt% to 20 wt%. For example, the cathode active material may satisfy Equation 1 below.

[Equation 1]

$$0.05\leq M2a/M2t\leq0.2$$

In Equation 1, M2t represents the total weight of the second element (M2) included in the cathode active material, and M2a represents the weight present at the inside of the primary particles among the second element (M2) included in the cathode active material.

Within the above range, stability of a crystal structure of the active material and prevention of the cation disorder by doping at the inside of the particles may be implemented while implementing a sufficient particle binder effect from the second element. Accordingly, an improved capacity retention may be achieved even when high-temperature charging/discharging is repeated.

Preferably, the ratio of the second element represented by M2a/M2t may be in a range from 0.07 to 0.2, preferably 0.09 to 0.2.

The distribution ratio of the second element denoted as M2a/M2t may be measured using an inductively coupled plasma (ICP).

In exemplary embodiments, the cathode active material may be sufficiently immersed or washed using a solvent to elute a surface coating of the cathode active material to be dissolved in the solvent.

An amount of the second element included in the solvent may be measured through the ICP, and the measured amount may be evaluated as an amount present on the particle surface (the outer surface of the secondary particle and the grain boundary of the primary particles) of the cathode active material.

The solvent may be a non-acidic solvent such as deionized water, ethanol or methanol to prevent an elution of nickel or the first element.

An amount of the second element measured through the ICP after the surface coating is removed may be evaluated as the amount (M2a) being doped or existing at the inside of the primary particles.

In some embodiments, the second element may be present in the form of a sulfide, a sulfate, a fluoride, a hydrate, a hydroxide, a carbonate and/or an oxide between the primary particles. In this case, binding and adhesion effects of the primary particles by the second element may be further enhanced. Accordingly, structural and chemical stability of the cathode active material including the lithium-nickel composite metal oxide particles may be further improved. Thus, stable capacity properties of the lithium secondary battery may be effectively provided.

Hereinafter, a method of preparing a cathode active material according to the above-described embodiments of the present invention is provided.

In exemplary embodiments, active material metal salts may be prepared. The active material metal salts may include a nickel salt, a manganese salt and a cobalt salt. In this case, the first element M1 in Chemical Formula 1 may include Co and Mn.

Examples of the nickel salt may include nickel sulfate ($NiSO_4$), nickel hydroxide ($Ni(OH)_2$), nickel nitrate ($Ni(NO_3)_2$), nickel acetate ($Ni(CH_3CO_2)_2$, a hydrate thereof, etc.

Examples of the manganese salt may include manganese sulfate ($MnSO_4$), manganese hydroxide ($Mn(OH)_2$), manganese nitrate ($Mn(NO_3)_2$), manganese acetate ($Mn(CH_3CO_2)_2$, a hydrate thereof, etc.

Examples of the cobalt salt may include cobalt sulfate ($CoSO_4$), cobalt hydroxide ($Co(OH)_2$), cobalt nitrate ($Co(NO_3)_2$), cobalt carbonate ($CoCO_3$), a hydrate thereof, etc.

In a preferable embodiment, nickel sulfate, manganese sulfate and cobalt sulfate may be used as the nickel salt, the manganese salt and the cobalt salt, respectively. In this case, a sulfate component remaining after the preparation of the active material precursor and the second element may be reacted to easily generate a metal sulfate component.

However, if the second element is excessively converted to a metal sulfate or a metal carbonate, the effect of suppressing cation disorder in the primary particles and blocking the side reaction of Ni and electrolyte may be reduced. Accordingly, a cleaning process may be performed to maintain an appropriate amount of the sulfate or the carbonate remaining after the preparation of the active material precursor.

In some embodiments, a salt, a hydroxide or an oxide of B, Al, Si, Ti, V, Fe, Cu, Zn, Zr, Mo and/or W may also be used.

In exemplary embodiments, an oxide of Na, K, Ca, Cr, Mn, Rb, Sr, Y, Pd, Ag, Cd, In, Sn, Cs, Ba, Pt, Au and/or Ce such as, e.g., sodium hydroxide (NaOH), potassium hydroxide (KOH), rubidium hydroxide (RbOH), cesium hydroxide (CsOH), calcium hydroxide ($Ca(OH)_2$), strontium hydroxide ($Sr(OH)_2$), barium hydroxide ($Ba(OH)_2$), etc., or a hydrate thereof may be used as the source of the second element.

In an embodiment, a carbonate such as sodium carbonate ($Na_2CO_3$), potassium carbonate ($K_2CO_3$), rubidium carbonate ($Rb_2CO_3$), cesium carbonate ($Cs_2CO_3$), calcium carbonate ($CaCO_3$), strontium carbonate ($SrCO_3$), barium carbonate ($BaCO_3$), etc., may be used. These may be used alone or in combination of two or more therefrom.

In exemplary embodiments, the metal salts of the active material as described above may be mixed and reacted by, e.g., a co-precipitation method to obtain an active material precursor. For example, the active material precursor may be prepared in the form of a nickel-manganese-cobalt hydroxide.

A precipitating agent and/or a chelating agent may be used to promote the co-precipitation reaction. The precipitating agent may include an alkaline compound such as sodium hydroxide (NaOH), sodium carbonate ($Na_2CO_3$), or the like. The chelating agent may include, e.g., aqueous ammonia (e.g., $NH_3H_2O$), ammonium carbonate (e.g., $NH_3HCO_3$), or the like.

The active material precursor may be mixed/reacted with the above-described second element source and a lithium compound to form a preliminary cathode active material. The preliminary cathode active material may be heat-treated to prepare lithium-nickel composite metal oxide particles as the cathode active material. For example, a temperature of the heat treatment may be in a range from about 600 °C to 850 °C.

The lithium compound may include, e.g., lithium carbonate ($Li_2CO_3$), lithium nitrate ($LiNO_3$), lithium acetate ($CH_3COOLi$), lithium oxide ($Li_2O$), lithium hydroxide (LiOH), or the like. These may be used alone or in combination of two or more therefrom. Preferably, lithium hydroxide may be used as the lithium source.

As described above, the heat treatment condition may be adjusted so that the second element may be sufficiently distributed between the primary particles. In some embodiments, the heat treatment may be performed in an oxygen (O2) atmosphere of 50 volume percent (vol%) or more at a temperature in a range from about 600 °C to 850 °C for 10 hours or more.

Preferably, the heat treatment may be performed in an oxygen atmosphere in ae range of 70 vol% to 90 vol%. Within the above range, distribution/diffusion of the second element to the grain boundary of the primary particles may be promoted while preventing damages of a particle structure due to an excessive oxidation.

The temperature of the heat treatment may be in a range from 700 °C to 850 °C, preferably from 700 °C to 800 °C. Preferably, the heat treatment may be performed for 10 to 12 hours.

The second element may be fixed at the grain boundary of the primary particles by the heat treatment, and a portion of the second element may be absorbed or doped into the primary particles.

In some embodiments, impurities such as LiOH and $Li_2CO_3$ may remain on a surface of the lithium-nickel composite metal oxide particle. The impurities may be removed by washing with an aqueous or organic solvent.

In an embodiment, at least some of remaining second elements other than the second elements incorporated into the lithium-nickel composite metal oxide particles may trap impurities such as LiOH, $Li_2CO_3$, etc., to form a metal oxide component or a metal carbonate component. Accordingly, a cohesive force within an inner region of the lithium-nickel composite metal oxide particles may be enhanced while reducing an amount of residual impurities.

According to embodiments of the present invention, a lithium secondary battery including a cathode including the above-described cathode active material for a lithium secondary battery is provided.

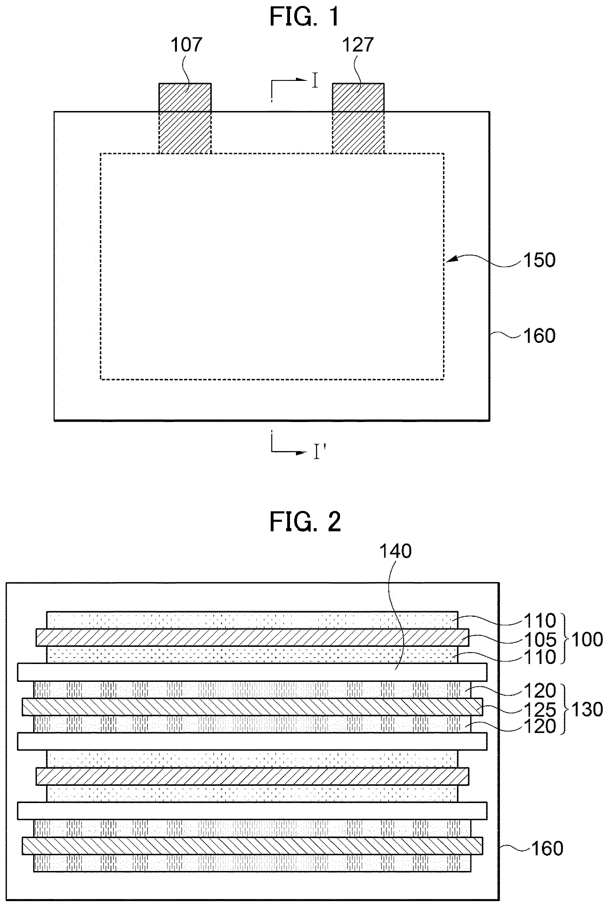

FIGS. 1 and 2 are a schematic plan view and a schematic cross-sectional view, respectively, of a lithium secondary battery in accordance with exemplary embodiments.

Referring to FIGS. 1 and 2 , a lithium secondary battery may include a cathode 100 including a cathode active material layer including the above-described cathode active material for a lithium secondary battery, and an anode 130 facing the cathode.

The cathode 100 may include a cathode active material layer 110 formed by coating the above-described cathode active material on the cathode current collector 105.

For example, a slurry may be prepared by mixing and stirring the cathode active material with a binder, a conductive material and/or a dispersing agent in a solvent. The slurry may be coated on the cathode current collector 105, dried and pressed to form the cathode.

The cathode current collector 105 may include, e.g., stainless steel, nickel, aluminum, titanium, copper or an alloy thereof, preferably may include aluminum or an aluminum alloy.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer 110 may be reduced, and an amount of the cathode active material may be relatively increased. Thus, capacity and power of the lithium secondary battery may be further improved.

The conductive material may be added to facilitate electron mobility between active material particles. For example, the conductive material may include a carbon-based material such as graphite, carbon black, graphene, carbon nanotube, etc., and/or a metal-based material such as tin, tin oxide, titanium oxide, a perovskite material such as $LaSrCoO_3$ or $LaSrMnO_3$, etc.

In exemplary embodiments, the anode 130 may include an anode current collector 125 and an anode active material layer 120 formed by coating an anode active material on the anode current collector 125.

The anode active material may include a material commonly used in the related art which may be capable of adsorbing and ejecting lithium ions. For example, a carbon-based material such as a crystalline carbon, an amorphous carbon, a carbon complex or a carbon fiber, a lithium alloy, silicon (Si)-based compound, tin, etc., may be used.

The amorphous carbon may include a hard carbon, cokes, a mesocarbon microbead (MCMB) fired at a temperature of 1,500 °C or less, a mesophase pitch-based carbon fiber (MPCF), etc. The crystalline carbon may include a graphite-based material such as natural graphite, graphitized cokes, graphitized MCMB, graphitized MPCF, etc.

The lithium alloy may further include aluminum, zinc, bismuth, cadmium, antimony, silicon, lead, tin, gallium, indium, etc.

The anode current collector 125 may include, e.g., gold, stainless steel, nickel, aluminum, titanium, copper or an alloy thereof, preferably may include copper or a copper alloy.

In some embodiments, a slurry may be prepared by mixing and stirring the anode active material with a binder, a conductive material and/or a dispersive agent in a solvent. The slurry may be coated on the anode current collector 125, and then dried and pressed to form the anode 130.

**EP 4 159 687 A1**

The binder and the conductive agent substantially the same as or similar to those mentioned above may also be used in the anode. In some embodiments, the binder for forming the anode may include, e.g., an aqueous binder such as styrene-butadiene rubber (SBR) for compatibility with the carbon-based active material, and may be used together with a thickener such as carboxymethyl cellulose (CMC).

A separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may also include a non-woven fabric formed from a glass fiber with a high melting point, a polyethylene terephthalate fiber, or the like.

In exemplary embodiments, an electrode cell may be defined by the cathode 100, the anode 130 and the separation layer 140, and a plurality of the electrode cells may be stacked to form an electrode assembly 150 that may have e.g., a jelly roll shape. For example, the electrode assembly 150 may be formed by winding, laminating or folding the separation layer 140.

The electrode assembly 150 may be accommodated together with an electrolyte in a case 160 to define a lithium secondary battery. In exemplary embodiments, a non-aqueous electrolyte may be used as the electrolyte.

For example, the non-aqueous electrolyte solution may include a lithium salt and an organic solvent. The lithium salt and may be represented by $Li^+X^-$. An anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

As illustrated in FIG. 2, electrode tabs (a cathode tab and an anode tab) may protrude from the cathode current collector 105 and the anode electrode current collector 125 included in each electrode cell to one side of the case 160. The electrode tabs may be welded together with the one side of the case 160 to form an electrode lead (a cathode lead 107 and an anode lead 127) extending or exposed to an outside of the case 160.

The lithium secondary battery may be manufactured in, e.g., a cylindrical shape using a can, a square shape, a pouch shape or a coin shape.

According to the above-described exemplary embodiments, the lithium-nickel composite metal oxide particle may include a high content of nickel composition in which nickel, lithium, a transition metal and at least one heterogeneous element may be combined within a predetermined range. Thus, chemical stability of the cathode active material may be improved, and the lithium secondary battery with improved life-span and long-term stability is provided while suppressing a reduction of capacity and average voltage

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

(1) Preparation of cathode active material

1) Examples and Comparative Examples

$NiSO_4$, $CoSO_4$, $MnSO_4$ and $Al(OH)_3$ were mixed using distilled water from which dissolved oxygen was removed by bubbling with $N_2$ for 24 hours so as to have compositions (molar ratio of Ni, Co, Mn and Al) shown in Table 1. The solution was put into a reactor at 50 °C and NaOH and $NH_3H_2O$ were used as a precipitating agent and a chelating agent, respectively, to proceed with a co-precipitation reaction for 48 hours to prepare an active material precursor.

Hydroxides of Ba, Sr and/or Y, and LiOH as a lithium source were further mixed as a source of a second element (M2) to have compositions shown in Table 1 below, and a calcination was performed at a temperature raging from 700°C to 730°C in an oxygen atmosphere ranging from 70 vol% to 90 vol% for 10 hours.

After the calcination, washing and drying were performed to obtain a cathode active material including lithium-nickel composite metal oxide particles. The compositions of the cathode active material are shown in Table 1 below.

Specifically, a total amount of the second element (M2) was analyzed using an ICP (Inductively Coupled Plasma).

In Examples and Comparative Examples, as shown in Table 1, a doping degree of the second element into primary particles was controlled while changing contents and molar ratios of metal elements.

For example, when a temperature of the calcination, a calcination time and an oxygen concentration were increased, an internal doping amount of the second element was increased. Accordingly, the internal doping amount of the second element was controlled by adjusting the calcination temperature, the calcination time and the oxygen concentration.

(2) Fabrication of secondary battery

Secondary batteries were fabricated using the cathode active materials of Examples and Comparative Examples as shown in Table 1. Specifically, the cathode active material, Denka Black as a conductive material and PVDF as a binder were mixed in a mass ratio of 94:3:3 to prepare a cathode mixture, and then the cathode mixture was coated on an aluminum substrate, dried and pressed to prepare a cathode. An electrode density after the pressing was 3.5 g/cc or more.

93 wt% of natural graphite as an anode active material, 5 wt% of KS6 as a flake type conductive material, 1 wt% of styrene-butadiene rubber (SBR) as a binder, and 1 wt% of carboxymethyl cellulose (CMC) as a thickener were mixed to form an anode slurry. The anode slurry was coated on a copper substrate, dried and pressed to prepare an anode.

The cathode and the anode prepared as described above were each notched by a predetermined size, and stacked with a separator (polyethylene, thickness: 25$\mu$m) interposed therebetween to form an electrode cell. Each tab portion of the cathode and the anode was welded. The welded cathode/separator/anode assembly was inserted in a pouch, and three sides of the pouch except for an electrolyte injection side were sealed. The tab portions were also included in sealed portions. An electrolyte was injected through the electrolyte injection side, and then the electrolyte injection side was also sealed. Subsequently, the above structure was impregnated for more than 12 hours.

The electrolyte was prepared by forming 1M LiPF$_6$ solution in a mixed solvent of ethylene carbonate (EC)/ethyl methyl carbonate (EMC)/diethylene carbonate (DEC) (25/45/30; volume ratio), and then 1 wt% of vinylene carbonate, 0.5 wt% of 1,3-propansultone and 0.5 wt% of lithium bis(oxalato)borate (LiBOB) were added.

Experimental Example

(1) Measurement of surface coating amount

The cathode active material particles of Examples and Comparative Examples were immersed in deionized water for a sufficient time so that both an outer surface coating and an inner coating of primary particles were eluted. Specifically, the cathode active material particles were immersed for a period at which an amount of each element was not substantially changed when analyzing the washed solution by an ICP.

After the element positioned in the coating or a grain boundary of the primary particles was sufficiently removed, the amount of the second element was measured in the dissolved solvent using ICP.

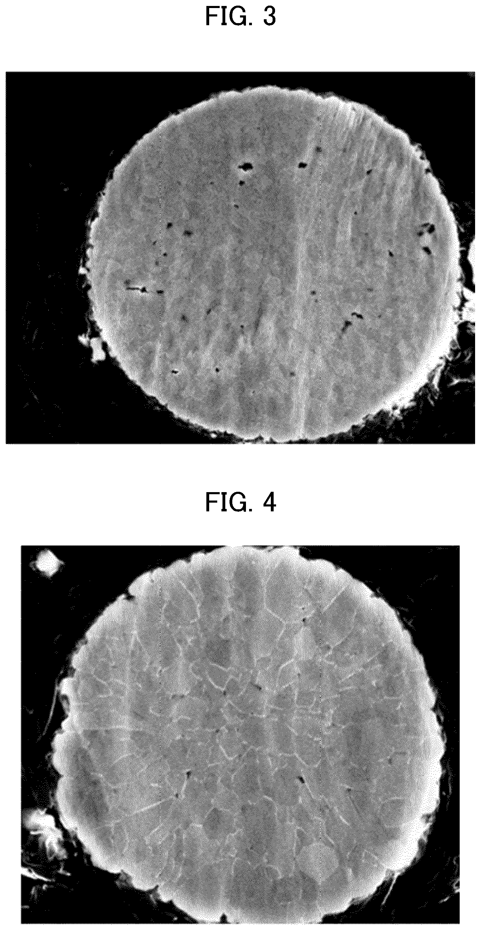

FIG. 3 is a scanning electron microscope (SEM) image of cathode active material particles according to Example 1 when a total amount of a second element was measured.

FIG. 4 is an SEM image of cathode active material particles according to Example 1 in a state in which the second element was dissolved from a surface after a solvent immersion.

(2) Measurement of distribution ratio of second element

An amount of the second element (M2a) present at an inside of the primary particles was calculated by subtracting the coating amount measured in (1) from a total amount (M2t) of the second element measured through ICP.

Further, a distribution ratio of the second element defined as (M2a/M2t)*100 was calculated.

(3) Measurement of initial discharge capacity

The lithium secondary batteries prepared according to Examples and Comparative Examples were charged (CC-CV 0.1 C 4.3V 0.005C CUT-OFF) in a chamber at 25 °C, and then a battery capacity (initial charge capacity) was measured. The batteries were discharged again (CC 0.1 C 3.0V CUT-OFF) and then a battery capacity (initial discharge capacity) was measured.

(4) Measurement of capacity retention (life-span property) during repeated charging/discharging

500 cycles of charging (CC/CV 0.5C 4.3V 0.05C CUT-OFF) and discharging (CC 1.0C 3.0V CUT-OFF) were repeated at 45 °C for the lithium secondary batteries according to Examples and Comparative Examples. A discharge capacity retention was evaluated as a percentage of a discharge capacity at a 500th cycle relative to a discharge capacity at a first cycle.

The results are shown in Tables 1 to 3 below.

[Table 1]

| | | Example 1 | Example 2 | Example 3 | Example 4 | Example 5 |
|---|---|---|---|---|---|---|
| Molar ratio of first element (M1) | Li/mol | 1.002 | 1.002 | 1.002 | 0.991 | 1.002 |
| | Ni/mol | 0.883 | 0.883 | 0.883 | 0.883 | 0.883 |
| | Co/mol | 0.091 | 0.091 | 0.091 | 0.091 | 0.091 |
| | Mn/mol | 0.026 | 0.026 | 0.026 | 0.026 | 0.026 |
| | Al/mol | - | - | - | - | - |
| Total amount of second element measured by ICP (M2t) (ppm) | Ba | 782 | 2032 | 3011 | - | - |
| | Sr | - | - | - | 473 | 2000 |
| | Y | - | - | - | - | - |
| Amount of second elements from solvent after removing a surface coating measured by ICP (ppm) | Ba | 727 | 1730 | 2399 | 432 | 1640 |
| | Sr | - | - | - | - | - |
| | Y | - | - | - | - | - |
| Amount of second element at an inside of particle (M2a) (ppm) | Ba | 55 | 302 | 612 | - | - |
| | Sr | - | - | - | 41 | 360 |
| | Y | - | - | - | - | - |
| M2a/M2t (%) | | 7% | 15% | 20% | 9% | 18% |
| Initial discharge capacity | mAh/g | 214 | 213 | 213 | 213 | 213 |
| Capacity retention (500 cycle) | % | 88 | 89 | 88 | 89 | 89 |

[Table 2]

| | | Example 6 | Example 7 | Example 8 | Example 9 | Example 10 |
|---|---|---|---|---|---|---|
| Molar ratio of first element (M1) | Li/mol | 0.999 | 1.002 | 1.002 | 1.002 | 1.002 |
| | Ni/mol | 0.883 | 0.834 | 0.973 | 0.883 | 0.883 |
| | Co/mol | 0.091 | 0.129 | 0.021 | 0.090 | 0.090 |
| | Mn/mol | 0.026 | 0.037 | 0.006 | 0.027 | 0.027 |
| | Al/mol | - | - | - | 0.010 | 0.010 |
| Total amount of second element measured by ICP (M2t) (ppm) | Ba | - | - | - | - | 503 |
| | Sr | - | 487 | 476 | 479 | 1023 |
| | Y | 891 | - | - | - | - |
| Amount of second elements from solvent after removing a surface coating measured by ICP (ppm) | Ba | - | - | - | - | 471 |
| | Sr | - | 442 | 433 | 435 | 922 |
| | Y | 722 | - | - | - | - |
| Amount of second element at an inside of particle (M2a) (ppm) | Ba | - | - | - | - | 32 |
| | Sr | - | 45 | 43 | 44 | 101 |
| | Y | 169 | - | - | - | - |
| M2a/M2t (%) | | 19% | 9% | 9% | 9% | 8.7% |
| Initial discharge capacity | mAh/g | 213 | 213 | 213 | 213 | 213 |
| Capacity retention (500 cycle) | % | 89 | 89 | 89 | 89 | 90 |

[Table 3]

| | | Example 11 | Example 12 | Comparative Example 1 | Comparative Example 2 |
|---|---|---|---|---|---|
| Molar ratio of first element (M1) | Li/mol | 1.003 | 1.003 | 1.002 | 1.003 |
| | Ni/mol | 0.884 | 0.884 | 0.883 | 0.884 |
| | Co/mol | 0.091 | 0.091 | 0.091 | 0.090 |
| | Mn/mol | 0.026 | 0.026 | 0.026 | 0.026 |
| | Al/mol | - | - | - | 0.010 |
| Total amount of second element measured by ICP (M2t) (ppm) | Ba | - | - | - | - |
| | Sr | 1512 | 1432 | - | - |
| | Y | | - | - | - |
| Amount of second elements from solvent after removing a surface coating measured by ICP (ppm) | Ba | - | - | - | - |
| | Sr | 504 | 1401 | - | - |
| | Y | - | - | - | - |
| Amount of second element at an inside of particle (M2a) (ppm) | Ba | - | - | - | - |
| | Sr | 1008 | 31 | - | - |
| | Y | - | - | - | - |
| M2a/M2t (%) | | 67% | 2% | - | - |
| Initial discharge capacity | mAh/g | 208 | 213 | 214 | 214 |
| Capacity retention (500 cycle) | % | 81 | 65 | 60 | 61 |

Referring to Tables 1 to 3, the improved initial discharge capacity and capacity retention at high temperature were achieved in Examples having the coating/doping of the second element.

In Example 11, as the second element was excessively absorbed into the primary particles, the initial discharge capacity was relatively decreased. In Example 12, as the doping amount into the primary particles of the second element was excessively reduced, the life-span or the capacity retention was relatively degraded.

**Claims**

1.   A cathode active material for a lithium secondary battery comprising lithium-nickel composite metal oxide particles, each of which has a secondary particle structure in which primary particles are aggregated,
   wherein the lithium-nickel composite metal oxide particles comprise:

   a first element including at least one element selected from the group consisting of B, Al, Si, Ti, V, Mn, Fe, Co, Cu, Zn, Zr, Mo and W; and
   a second element having an ionic radius of 80 pm or more, the second element is different from nickel and the first element,
   wherein the second element is present on an outer surface of the secondary particle, at grain boundaries between the primary particles and at an inside of the primary particles.

2.   The cathode active material for a lithium secondary battery of claim 1, wherein the second element includes at least one selected from the group consisting of Na, K, Ca, Cr, Mn, Rb, Sr, Y, Pd, Ag, Cd, In, Sn, Cs, Ba, Pt, Au and Ce.

3.   The cathode active material for a lithium secondary battery of claim 1 or claim 2, wherein the lithium-nickel composite metal oxide particles have a chemical structure represented by Chemical Formula 1:

[Chemical Formula 1]   $Li_xNi_yM1_{1-y}M2_zO_w$

wherein, in Chemical Formula 1, M1 represents the first element, M2 represents the second element, $0<x\leq1.1$, $0.8\leq y\leq0.98$, $0.001\leq z\leq0.02$, and $1.8\leq w\leq2.02$.

4.  The cathode active material for a lithium secondary battery of claim 3, wherein, in Chemical Formula 1, $0.85\leq y\leq0.95$.

5.  The cathode active material for a lithium secondary battery of claim 3, wherein, in Chemical Formula 1, $0.001\leq z\leq0.01$.

6.  The cathode active material for a lithium secondary battery of any one of claims 1 to 5, wherein a sum of an amount present on the outer surface and an amount at the grain boundaries between the primary particles is greater than an amount present at the inside of the primary particles based on a total amount of the second element.

7.  The cathode active material for a lithium secondary battery of any one of claims 1 to 5, wherein an amount present at the grain boundaries between the primary particles is greater than an amount present at the inside of the primary particles based on the total amount of the second element.

8.  The cathode active material for a lithium secondary battery of any one of claims 1 to 7, wherein a ratio of the second element present at the inside of the primary particles based on a total weight of the second element is from 5 wt% to 20 wt%.

9.  The cathode active material for a lithium secondary battery of any one of claims 1 to 7, wherein a ratio of the second element present at the inside of the primary particles based on a total weight of the second element is from 7 wt% to 20 wt%.

10. The cathode active material for a lithium secondary battery of any one of claims 1 to 9, further comprising at least one selected from the group consisting of a sulfide, a sulfate, a fluoroxide, a hydrate, a hydroxide, a carbonate and an oxide containing the second element.

11. The cathode active material for a lithium secondary battery of claim 10, wherein the sulfide, the sulfate, the fluoroxide, the hydrate, the hydroxide, the carbonate or the oxide containing the second element is present at the grain boundaries between the primary particles.

12. A method of preparing a cathode active material for a lithium secondary battery, comprising:

    preparing an active material precursor containing nickel;
    reacting the active material precursor, a source of a heterogeneous element source with an ion radius of 80 pm or more, and a lithium compound to form a preliminary cathode active material; and
    heat-treating the preliminary cathode active material in an oxygen atmosphere of 50 vol% or more.

13. The method of claim 12, wherein the heat-treating is performed in an oxygen atmosphere of 70 vol% to 90 vol%, and a temperature of the heat-treating is from 600 °C to 850 °C.

14. The method of claim 12 or claim 13, wherein the heterogeneous element includes at least one selected from the group consisting of Na, K, Ca, Cr, Mn, Rb, Sr, Y, Pd, Ag, Cd, In, Sn, Cs, Ba, Pt, Au and Ce.

15. The method of any one of claims 12 to 14, wherein the preliminary cathode active material has a secondary particle structure in which primary particles are aggregated, and
    the heat-treating comprises partially doping the heterogeneous element into the primary particles.

# FIG. 1

# FIG. 2

## FIG. 3

## FIG. 4

| | Europäisches Patentamt European Patent Office Office européen des brevets | **EUROPEAN SEARCH REPORT** | **Application Number** EP 22 19 8548 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHANG MEILING ET AL: "Yttrium modified Ni-rich LiNi0.8Co0.1Mn0.1O2 with enhanced electrochemical performance as high energy density cathode material at 4.5?V high voltage", JOURNAL OF ALLOYS AND COMPOUNDS, ELSEVIER SEQUOIA, LAUSANNE, CH, vol. 774, 27 September 2018 (2018-09-27), pages 82-92, XP085527787, ISSN: 0925-8388, DOI: 10.1016/J.JALLCOM.2018.09.281 * page 84, column 2, paragraph 1 - page 85, column 1 * ----- | 1-15 | INV. C01G53/00 |
| X | HYEJUNG KIM ET AL: "A New Coating Method for Alleviating Surface Degradation of LiNi 0.6 Co0.2Mn0.2O2 Cathode Material: Nanoscale Surface Treatment of Primary Particles", NANO LETTERS, vol. 15, 10 February 2015 (2015-02-10), pages 2111-2119, XP055585017, DOI: 10.1021/acs.nanolett.5b00045 | 1 | |
| Y | * page 2118, paragraph Experimental section; figure 1 * ----- -/-- | 1-15 | TECHNICAL FIELDS SEARCHED (IPC) C01G |

The present search report has been drawn up for all claims

| Place of search | Date of completion of the search | Examiner |
|---|---|---|
| Munich | 23 February 2023 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

**EUROPEAN SEARCH REPORT**

Application Number

EP 22 19 8548

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PARK KANG-JOON ET AL: "Improved Cycling Stability of Li[Ni 0.90 Co 0.05 Mn 0.05 ]O 2 Through Microstructure Modification by Boron Doping for Li-Ion Batteries", ADVANCED ENERGY MATERIALS, vol. 8, no. 25, 11 July 2018 (2018-07-11), pages 1-9, XP055791596, DE ISSN: 1614-6832, DOI: 10.1002/aenm.201801202 Retrieved from the Internet: URL:https://api.wiley.com/onlinelibrary/td m/v1/articles/10.1002%2Faenm.201801202> * page 2, paragraph 2 - page 3, column 1 * ----- | 1-15 | |
| Y | LV HAIJIAN ET AL: "A review: Modification strategies of nickel-rich layer structure cathode (Ni >= 0.8) materials for lithium ion power batteries", JOURNAL OF ENERGY CHEMISTRY, ELSEVIER, AMSTERDAM, NL, vol. 60, 17 February 2021 (2021-02-17), pages 435-450, XP086547885, ISSN: 2095-4956, DOI: 10.1016/J.JECHEM.2021.01.044 [retrieved on 2021-02-17] * the whole document * ----- | 1-15 | TECHNICAL FIELDS SEARCHED (IPC) |

-/--

The present search report has been drawn up for all claims

| Place of search | Date of completion of the search | Examiner |
|---|---|---|
| Munich | 23 February 2023 | Timmermans, Michel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 159 687 A1

| | **EUROPEAN SEARCH REPORT** | Application Number |
|---|---|---|
| | | **EP 22 19 8548** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | THIEN NGUYEN TRUNG ET AL: "Enhanced cycling stability of Sn-doped Li[Ni0.90Co0.05Mn0.05]O2 via optimization of particle shape and orientation", CHEMICAL ENGENEERING JOURNAL, ELSEVIER, AMSTERDAM, NL, vol. 405, 7 September 2020 (2020-09-07), XP086345514, ISSN: 1385-8947, DOI: 10.1016/J.CEJ.2020.126887 [retrieved on 2020-09-07] | 1-4,12, 14,15 | |
| Y | * page 4, column 1, line 6 – line 8 * <br> * page 2, column 2, paragraph 3 * <br> * page 2, column 1, paragraph 2.1.1 * <br> ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 23 February 2023 | Timmermans, Michel |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.............................................................................
& : member of the same patent family, corresponding
   document

EPO FORM 1503 03.82 (P04C01)